# EUROPÄISCHE PATENTSCHRIFT

(11) **EP 1 289 679 B1**
(45) Veröffentlichungstag und Bekanntmachung des Hinweises auf die Patenterteilung: **28.07.2004**
(21) Anmeldenummer: 01943386.1
(22) Anmeldetag: 16.05.2001
(51) Int. Cl.: B05D 5/06

(54) **VERFAHREN ZUR HAFTFESTEN BESCHICHTUNG VON SUBSTRATEN MIT KORROSIVEN OPTISCHEN SCHICHTEN**
METHOD FOR ADHESIVELY COATING SUBSTRATES WITH CORROSIVE OPTICAL LAYERS
PROCEDE DE REVETEMENT ADHERENT DE SUBSTRATS AVEC DES COUCHES OPTIQUES CORROSIVES

(30) Priorität: 16.05.2000 DE 10023862
(43) Veröffentlichungstag der Anmeldung: 12.03.2003
(73) Patentinhaber: Konig, Klaus-P., 82131 Gauting (DE)
(72) Erfinder: KÖNIG, Klaus-P., 82131 Gauting (DE); ZANDELIN, Lennart, S-260 33 Paarp (SE); KAESSMANN, Michael, 81377 München (DE)
(74) Vertreter: von Samson-Himmelstjerna, Friedrich R., Dipl.-Phys.
(86) Internationale Anmeldenummer: PCT/EP2001/005602
(87) Internationale Veröffentlichungsnummer: WO 2001/087501

(56) Entgegenhaltungen:
- EP-A- 0 037 235
- EP-A- 0 684 083
- EP-A- 0 897 759
- WO-A-96/33026
- DE-A- 19 639 059
- US-A- 3 677 792
- US-A- 4 407 871
- US-A- 5 924 225

## Beschreibung

Die vorliegende Erfindung betrifft beschichtete Substrate mit metallischem Oberflächeneindruck bzw. beschichtete Substrate mit metallischem Oberflächeneindruck, erhältlich nach Verfahren zur haftfesten Beschichtung von Substraten mit korrodierbaren metallischen Schichten, derartige Verfahren, sowie Verwendungen der mit den vorgenannten Verfahren hergestellten Verfahrensprodukte bzw. der entsprechend erhältlichen, beschichteten Substrate mit metallischem Oberflächeneindruck.

Die DE 40 09 857 A1 und die DE 40 09 858 beschreiben eine Lackierung, die als basecoat/clearcoat-Verfahren bekannt ist. Dabei werden z.B. Metallic-Basislacke (korrodierbare optische Schichten), die polymere Harze enthalten, auf mit einer handelsüblichen Elektrotauchlackierung und einem handelsüblichen Füller beschichtete phosphatierte Stahlbleche appliziert. Die applizierten Basislacke werden getrocknet (nicht eingebrannt), anschließend wird ein handelsüblicher Klarlack appliziert, und dann werden die beiden Lackschichten bei 140°C eingebrannt.

Es ist eine seit langem geübte Praxis, beliebige Substrate, insbesondere Substrate auf Holz- oder Kunststoffbasis, dadurch optisch zu veredeln, daß äußerlich ein metallischer Gesamteindruck vermittelt wird. Derartige äußerliche Wirkungen werden durch das Auftragen spezifischer Beschichtungen auf die Substrate erreicht. Diese Beschichtungen der Substrate müssen dabei einerseits hohen optischen Anforderungen gerecht werden, nämlich einen homogenen ästhetischen Gesamteindruck ohne wolkige Flekkenbilder und Schattierungen und eine glänzende, im Idealfall sogar spiegelnde Oberfläche, erzeugen. Andererseits müssen die Beschichtungen neben dem optischen Anforderungsprofil aber auch funktionellen Eigenschaften genügen. Von Interesse sind hier insbesondere die Haftfestigkeit der auf das Substrat aufgetragenen Schicht(en) bzw. die Beständigkeit der Beschichtung gegenüber oxidierenden oder korrodierenden äußeren Einflüssen.

Nach dem Stand der Technik sind zahlreiche Verfahren zur Vorgehensweise beim Auftragen von korrodierbaren optischen Schichten, insbesondere metallischen Schichten, auf Substrate, zum Beispiel auf Kunststoffe, bekannt. Bei der Kunststoffmetallisierung wären etwa die Kunststoffgalvanisierung, das Aufsprühen geeigneter Lösungen oder das Aufdampfen von Metallen in Vakuum auf das Substrat auf Kunststoffbasis zu nennen. Derartige Beschichtungen sollen mitunter auch das Substrat schützen, zum Beispiel Kunststoffe gegen Einwirkung von Lösungsmitteln, Öl und/oder Feuchtigkeit, insbesondere führen sie aber zu einer erheblichen Kosten- und Gewichtsersparnis gegenüber dem Einsatz metallischer Substrate im Falle eines gewünschten metallischen Gesamteindrucks.

Allerdings muß für den Fall der Beschichtung mit korrodierbaren metallischen Lösungen sichergestellt werden, daß sowohl die Haftung der korrodierbaren metallischen Schicht auf dem Substrat als auch eine geringe Anfälligkeit gegen Korrosion gewährleistet ist. Um diese Anforderungen zu erfüllen, werden nach dem Stand der Technik insbesondere transparente, gegebenenfalls aber auch eingefärbte Schutzlacke eingesetzt, die vor dem Aufbringen auf die korrodierbare metallische Schicht zumeist mit einer Härterkomponente versetzt werden. Die Härterkomponente wird dabei dem Schutzlack vorher zugefügt, um den Aushärtvorgang der Harzkomponente im Schutzlack zu beschleunigen, aber auch um beispielsweise die Abrieb-, die Benzin- oder auch die Parfümfestigkeit des beschichteten Substrats zu erhöhen. Dieses Vorgehen nach dem Stand der Technik führt zwar dazu, daß die Korrosionsanfälligkeit der korrodierbaren metallischen Schicht durch die Auftragung des Schutzlack-/Härter-Gemisches verzögert wird, erweist sich jedoch in jedem Fall dann als ungeeignet, wenn Ungenauigkeiten bei der Auftragung der Schutzlackschicht oder etwa Verletzungen der Schutzlackschicht auftreten. Derartigen Verletzungen, bspw. in Form von Rissen oder Abplatzungen, folgt dann unerwünschterweise das Phänomen der sogenannten "korrosiven Unterwanderung". Die Korrosion frißt sich dabei vom Ort der Schutzlackschichtverletzung entlang der metallischen korrodierbaren Schicht fort und führt nach kürzester Zeit zu erheblichen optischen Beeinträchtigungen der beschichteten Substrate und schließlich zu deren Unbrauchbarkeit.

Für die im Stand der Technik beschriebene Vorgehensweise beim Auftragen der Schutzlackierung wurde weiterhin beobachtet, daß Feuchtigkeit oder Gase auch durch das Substratmaterial selbst von der nicht beschichteten Seite an die äußerlich aufgetragene korrodierbare metallische Schicht diffundieren und dortselbst Korrosionsphänomene hervorrufen können. Dieses Problem bei der Substratveredlung nach dem Stand der Technik ist sowohl für verschiedene Metall- als auch für Kunststoffsubstrate wohl bekannt. Diesem Phänomen wiederum entgegenzuwirken, ist nur unter Inkaufnahme erheblicher Kostennachteile durch aufwendiges Beschichten der Unter-/Innenseiten des Substrates möglich. Die nach dem Stand der Technik unzureichenden Möglichkeiten, den Korrosionsschutz bei Substraten mit korrodierbaren metallischen Schichten sicherzustellen, führen im Ergebnis dazu, daß bislang Substrate mit korrosionsanfälligen Beschichtungen nicht im Außenbereich eingesetzt werden können.

Darüber hinaus ergeben sich bei den bisher bekannten Beschichtungen mit korrosionsanfälligen optischen Materialien bzw. den entsprechenden Beschichtungsverfahren erhebliche Schwierigkeiten im Hinblick auf deren Haftbeständigkeit, insbesondere Schwierigkeiten der Haftung einer metallischen korrodierbaren Schicht auf dem Substrat. Zwar wird regelmäßig das Substrat vor der Auftragung einer metallischen korrodierbaren Schicht, bspw. einer Silberschicht, mit einer Grundierlackschicht behandelt, um die Haftfestigkeit der metallischen korrodierbaren Schicht zu erhöhen. Eine Verbesserung der Haftfestigkeit wird jedoch nach dem Stand der Technik nur dann erreicht, wenn die Auftragung der metallischen korrodierbaren Schicht noch vor dem Durchtrocknen der Grundierlackschicht erfolgt. Dieses Vorgehen führt zwar hinsichtlich der Haftfestigkeit zu befriedigenden Ergebnissen, erweist sich jedoch insoweit als nachteilig, als bei einer regelmäßig durchgeführten Wärmebehandlung nach der Auftragung der Schutzlackschicht(en) auf die metallische korrodierbare Schicht selbige optisch beeinträchtigt wird, bspw. durch weiße Flecken oder Kräuselungen. Derartige Effekte sind insbesondere bei Verspiegelungen jedoch nicht erwünscht.

Die Druckschriften WO 96 33026 A, US-A-3 667 792, US-A-5 924 225, US-A4 407 871, EP-A-0 037 235, DE 196 39 059 A und EP-A-0 897 759 beschreiben alle Metallisierungsverfahren, die keinen Erwärmungsschritt unmittelbar nach dem Aufbringen der Metallschicht beinhalten.

Die EP-A-0 684 083 offenbart im Zusammenhang mit der US-A-4713143 ein Verfahren zur Herstellung metallisierter Teile, bei dem ein korrosionsanfälliges Metall auf eine Grundierschicht eines Substrat inselförmig im Vakuum abgeschieden wird. Nach der Abscheidung wird ein Ätzschritt vorgenommen, um Kanäle zwischen den Inseln metallfrei zu machen. Damit wird die Haftung eines ein Decklackes auf der Inselstruktur verbessert. Der Ätzschritt wird bei einer Temperatur von 150 - 160°F (65,5 - 71°C) durchgeführt. Es wird nicht berichtet, daß ein Erwärmen ohne Ätzen eine Verbesserung der Haftfähigkeit der Metallschicht auf der Grundierschicht zur Folge haben könnte.

Aufgabe der vorliegenden Erfindung ist es daher, Substrate mit Beschichtungen, die einen metallischen Gesamteindruck aufgrund aufgetragener korrosionsanfälliger metallischer Materialien erzeugen, zur Verfügung zu stellen und geeignete Verfahren zu deren Herstellung bereitzustellen, wobei gewährleistet sein muß, daß die beschichteten Substrate bzw. die Verfahren zur Herstellung von derartig beschichteten Substraten als Ergebnis die bestmögliche Haftung der Beschichtungen auf dem Substrat aufweisen, die Korrosionsanfälligkeit der Beschichtung auf ein Minimum beschränkt ist, keine optischen Beeinträchtigungen herstellungsbedingt auftreten, wobei eine prozeßoptimierte Vorgehensweise bei der Herstellung der Substrate gewünscht ist.

Die vorgenannten Aufgaben werden durch die Ansprüche 1, 14 und 15 der vorliegenden Erfindung gelöst.

Gemäß Anspruch 1 wird ein beschichtetes Substrat mit metallischem Oberflächeneindruck, also einer Wirkung, die das Substrat insgesamt metallisch erscheinen läßt, durch ein Verfahren erhalten, bei dem (a) auf die Substratoberfläche mindestens eine Grundierlackschicht aufgetragen wird, (b) die mindestens eine Grundierlackschicht durchgetrocknet wird, (c) dann eine korrodierbare metallische Schicht mittels eines Spritz- oder Galvanisierungsverfahrens aufgetragen wird, schließlich gemäß (d) mindestens eine Schutzlackschicht aufgetragen wird, wobei als Schutzlackschicht ein einkomponentiger Schutzlack, insbesondere ein Nanolack, oder ein zweikomponentiger Schutzlack als Mischung aufgetragen wird, enthaltend Schutzlack und Härterkomponente, das dadurch gekennzeichnet ist, daß ein Erwärmungsschritt des gemäß der vorangegangenen Schritte (a), (b) und (c) beschichteten Substrats vor dem Schritt (d) vorgenommen wird.

Der vorliegenden Erfindung liegt dabei die Erkenntnis zugrunde, daß nach Auftragung der korrodierbaren metallischen Schicht auf das Substrat mit einer vollständig durchgetrockneten Grundierlackschicht eine nochmalige Erwärmung nach Schritt (c) die Haftung der korrodierbaren metallischen Schicht auf dem lackierten Substrat sicherstellt. Bei diesem Erwärmungsschritt werden bevorzugt 120°C, bevorzugter 100°C und insbesondere 80°C nicht überschritten. Ohne an eine wissenschaftliche Theorie gebunden zu sein, scheint die Erwärmung zu einer kurzzeitigen Aufweichung des Grundierlacks zu führen. Ohne den Erwärmungsschritt kann eine ausreichende Haftung der korrodierbaren Schicht auf dem Substrat mit durchgetrocknetem Grundierlack nicht erreicht werden.

Diese Erkenntnis der Erfinder führt im Ergebnis nicht nur zu einem optimalen Korrosionsschutz, sondern wird auch den Anforderungen an die Haftung der korrodierbaren metallischen Schicht auf dem Substrat bzw. der Haftung, bspw. der Schutzlackschicht(en) auf der korrodierbaren metallischen Schicht, gerecht, ohne daß verfahrensgemäß der zusätzliche Aufwand des Auftragens mehrerer Lösungen erforderlich wäre oder optische Beeinträchtigungen aufträten.

Bei derartig beschichteten Substraten kann es sich um Holz, Spanholz, Kunststoff oder Metall handeln. Die erfindungsgemäß beschichteten Substrate werden in ihrer Beschichtung eine oder mehr Grundierlackschichten, vorzugsweise mit einer Schichtdicke zwischen 5 und 30 µm, aufweisen. Hierauf können eine oder mehr korrodierbare metallische Schicht(en) mit einer Schichtdicke von 0,01 bis 1 µm aufgetragen werden, beispielsweise eine Silberschicht gefolgt von einer Kupferschicht. Die mindestens eine Schutzlackschicht, die sich auf der/den metallischen korrodierbaren Schicht(en) aufgetragen findet/n, hat/haben insgesamt bevorzugt eine Schichtdicke von 5 bis 50 µm, insbesondere 15 bis 50 µm, allgemein kann die Schichtdicke jedoch auch eine Stärke von bis zu 100 µm aufweisen. Derartige Schichtdicken der vorgenannten Schichten von typischerweise weniger als 50 µm beeinträchtigen auch in keiner Weise die an das beschichtete Substrat zu stellenden optischen Anforderungen.

Der Grundierlack, mit dem das Substrat gemäß Verfahrensschritt (a) behandelt wird, dient als Haftvermittler zwischen Trägermaterial und dem korrodierbaren metallischen Film sowie ggf. als Diffusionsschutz. Hierbei erweist es sich als vorteilhaft, wenn der Grundierlack eine gewisse Wasserverträglichkeit und Benetzbarkeit aufweist. Als Grundierlacke kommen alle handelsüblichen zweikomponentigen Lacke in Betracht, bspw. Durodur® (3051D-003, Morton bzw. Rohm & Haas mit dem Härter 5409). Aber auch einkomponentige Lacke, bspw. sogenannte Nanolacke mit Nanopartikeln als Inhaltsstoffe (auch bekannt unter der Bezeichnung Hybridlacke basierend auf Sol-Gel-Technologie), können eingesetzt werden. Die einkomponentigen Lacke oder die zweikomponentigen Lacke mit Härter können über Luft- oder Ofentrocknung und/oder über UV-Härtung, bspw. durch Einmischen von photoaktiven Komponenten, durchgetrocknet werden.

Die Grundierlackschicht ummantelt das Substrat und verbessert die Anhaftungsfähigkeit der korrodierbaren metallischen Schicht auf dem Untergrund. Unebenheiten oder aufgerauhte Stellen auf dem Substrat sollen weitestgehend überdeckt werden. Auch die Auftragung des Grundierlacks kann ggf. ein- oder mehrfach wiederholt werden.

Zur Auftragung der Grundierlackschicht gemäß Verfahrensschritt (a) eignen sich insbesondere Spritzverfahren, es kommen jedoch auch Eintauchverfahren zum Zuge, aber auch das sogenannte "Flow Coaten" der Substrate. Gemäß Verfahrensschritt (b) kann die Durchtrocknung der Grundierlackschicht (en) als Luft-, Ofentrocknung und/oder UV-Härtung von mindestens 5 Minuten vorgenommen werden, bevor der nächste Verfahrensschritt - sei es ein abermaliges Aufbringen des Grundierlacks, sei es gemäß Verfahrensschritt (c) die Auftragung der korrodierbaren metallischen Schicht - erfolgt. Die Dauer bzw. Temperatur der Luft- und/oder Ofentrocknung ist dabei abhängig vom Substrat ebenso wie auch vom spezifischen Bindemittel des Grundierlacks. Typischerweise wird eine Trocknungsdauer von 5 min bis 10 h gewählt werden, in Abhängigkeit vom Substrat, von der Trocknungstemperatur und vom Grundierlack. Bevorzugt sind Trocknungszeiten zwischen 1 h und 2 h. Die Temperaturen für die Trocknung werden vorzugsweise zwischen 20 und 120° C, liegen, ganz besonders bevorzugt zwischen 70 und 100° C.

Im Rahmen der vorliegenden Erfindung werden beschichtete Substrate beansprucht, deren korrodierbare Schicht eine Metallschicht ist. Ganz besonders bevorzugt sind dabei Silberschichten, so daß als erfindungsgemäß beschichtete Substrate insbesondere Spiegel mit Kunststoff- oder Holzkern oder verspiegelte Gegenstände für jedweden Verwendungszweck zu nennen wären.

In einer bevorzugten Ausführungsform des Verfahrensschritts (d) des erfindungsgemäßen Verfahrens kann in einem Verfahrensschritt (d1) auf die mindestens eine korrodierbare metallische Schicht zunächst mindestens ein Schichtbildner ohne Härterkomponente, enthaltend mindestens einen Schutzlack (Komponente A), oder ein Schichtbildner ohne Schutzlack, enthaltend mindestens eine Härterkomponente (Komponente B), aufgebracht werden, ehe in einem Verfahrensschritt (d2) hierauf mindestens eine zweikomponentige Mischung, enthaltend mindestens einen Schutzlack (Komponente A) und mindestens eine Härterkomponente (Komponente B), als Schutzlackschicht, ggf. auch einen einkomponentigen Schutzlack (bspw. ein Nanolack), aufgetragen wird. Durch eine derartige Verfahrensführung wird zusätzlich sichergestellt, daß die korrodierbare metallische Schicht bestmöglich an das Substrat anhaftet.

Eine derartige Verfahrensweise bewirkt, daß eine Vernetzung oder Verbindung der gemäß (d1) und (d2) aufgetragenen Schichten durch die korrodierbare metallische Schicht sogar bis hin zum grundierlackierten Substrat erfolgt. Beschichtete Substrate, die aus einer derartigen bevorzugten Verfahrensführung erhältlich sind, sind gleichfalls Gegenstand der vorliegenden Erfindung.

In Verfahrensschritt (d) bzw. Verfahrensschritt (d2) nach bevorzugter Ausführungsform kann also ein Schutzlack, bspw. enthaltend eine Harzkomponente der nachfolgend als bevorzugt bezeichneten Art, mit einem Härter, gleichfalls bspw. der nachfolgend bevorzugt genannten Art, eingesetzt werden. Natürliche Harze oder Kunstharze sind als Komponenten des Schutzlacks zu erwähnen. In einer keineswegs abschließenden Aufzählung von bspw. Kunstharzen, die als Bindemittel im Schutzlack eingesetzt werden können, sind zu nennen: Phenolharze, Aminharze (zum Beispiel Benzoguanamin-, Harnstoff-, Melamin-Harze), Alkydharze, Polyvinylacetat, Epoxidharze, Polyurethanharze, Polyesterharze mit Kolophonium modifizierte Phenolharze, Chlorkautschuk, chloriertes Polyprophylen, Cyklokautschuk, Ketonharze oder Acrylatharze. In den Schutzlacken werden die Bindemittel mit den jeweils einsetzbaren Lösungs- bzw. Verdünnungsmitteln kombiniert, wobei dem Fachmann geläufig ist, welche Kombinationen von Lösungs- bzw. Verdünnungsmitteln und Bindemitteln in welcher Form als Schutzlacke applizierbar sind.

Als Härter für die Schutzlackschicht können insbesondere die folgenden Härter zur Anwendung kommen: Chlorwasserstoff, Peroxide oder polyfunktionelle Verbindungen, wie z.B. Polyamine, Polyepoxide oder Polyisocyanate.

Sofern gemäß bevorzugter Ausführungsform Verfahrensschritt (d1) der Auftragung der zweikomponentigen Mischung bzw. des einkomponentigen Schutzlacks als Schutzlackschicht (Verfahrensschritt (d) entspricht Verfahrensschritt (d2) in der bevorzugten Ausführungsform) vorgeschaltet wird, wird als Schichtbildner vorzugsweise mindestens ein Schutzlack, bspw. einer der vorgenannten Schutzlacke, ohne Härterkomponente(n), der (die) aber ggf. weitere andere Substanzen enthalten kann (können), gewählt oder es werden, sofern für die Schutzschicht als Schichtbildner ein oder mehr Härter, ohne daß im Schichtbildner Schutzlacke, wohl aber ggf. weitere andere Substanzen, enthalten sein dürfen, gewählt, bspw. einer der vorgenannten Härter.

Gemäß Verfahrensschritt (d) oder (d2) bei der bevorzugten Ausführungsform wird als Schutzlackschicht eine zweikomponentige Mischung aufgetragen, die mindestens einen Schutzlack und mindestens eine Härterkomponente enthält, oder ein einkomponentiger Lack (bspw. ein Nanolack). Die Härterkomponente dient dabei dazu, die aufgetragenen Lakke zu stabilen Oberflächenschichten aushärten zu lassen. Die Beschleunigung der Aushärtung von Lacken durch die Härterkomponente kann dabei auf einer Beschleunigung der Polymerisation, Polyaddition oder Polykondensation der Harzkomponente im Lack beruhen. Klarlacke sind ganz besonders bevorzugt.

Die zur Beschichtung eines Substrats gemäß Verfahrensschritten (d1) und (d2) eingesetzten Schutzlacke und/oder Härter können identisch oder verschieden sein. Dabei können die Verfahrensschritte (d1) oder (d2) ggf. auch jeweils ein- oder mehrfach hintereinander wiederholt werden. Beispielsweise kann der Verfahrensschritt (d1) mit einem identischen oder auch (einem) anderen Schutzlack/en zwei- oder mehrfach wiederholt werden, ehe die Mischung für die Bildung der Schutzlackschicht gemäß Verfahrensschritt (d2) appliziert wird.

Bevorzugt ist es auch, einen Luft- und/oder Ofentrocknungsschritt nach der Auftragung der Schutzlackschicht(en) bzw. nach Verfahrensschritt (d1) einzulegen, aber auch eine UV-Aushärtung der Schicht ist denkbar. Der Trocknungsschritt wird insbesondere nach einem Verfahrensschritt (d1) vorteilhaft sein, wenn die Schichtbildner dieser Schicht mindestens einen Schutzlack, aber keine Härterkomponente, enthalten. Trocknungsschritte nach Verfahrensschritt (d1 (d2) oder (d) sollten vorteilhafterweise eine Dauer von mindestens 1 Minute, insbesondere von 5 bis 15 min, haben. Temperatur und Dauer der Trocknung hängen vom Substrat und von der Zusammensetzung des Schutzlacks bzw. der Dauer der Trocknung ab, wobei die Trocknungstemperatur niedriger als 120° C, typischerweise zwischen 50 und 80°C, liegen sollte. Ganz besonders bevorzugt ist eine derartige Luft- und/oder Ofentrocknung nach Auftragung der Schutzlackschicht. Typischerweise wird für die Aushärtung der Grundierlackschicht eine höhere Temperatur gewählt als für die Aushärtung der Schutzlackschicht und/oder nach Verfahrensschritt (d1), insbesondere eine um typischerweise 10 bis 20°C höhere Temperatur.

Bei dem nach einem erfindungsgemäßen Verfahren behandelten Substraten wird es sich bevorzugt um Holz, Spanholz, Metall oder Kunststoff handeln. Dabei ist das erfindungsgemäße Verfahren auf alle Hölzer oder auch auf furnierte Materialen anwendbar. Unter den erfindungsgemäß beschichtbaren Kunststoffen wären in einer keineswegs abschließenden Aufzählung Acrylnitrilbutadien-Styrol (ABS), Polystyrol (PS), Polypropylen (PP), Polycarbonat (PC), Polymethylmethacrylat (PMMA), Polyamid (PA), Polyvinylchlorid (PVC), Polybutylenterephthalat (PBTB), Polyphenylenoxid (PPO), Polyurethan-Rim (PUR-Rim), R-Rim, PP-EPDM, GF-UP, SMC oder BMC zu nennen.

Die korrodierbare metallische Schicht im Verfahrensschritt (c) des vorliegenden erfindungsgemäßen Verfahrens wird mittels Spritz- und/oder Galvanisierungsmethoden auf das Substrat mit (einer) darunter liegende/n Schicht(en), z.B. Grundierlackschicht(en), aufgebracht. Auch metallische Effektlacke können als korrodierbare metallische Schicht aufgetragen werden.

Es handelt sich bei der korrodierbaren Schicht um eine metallische Schicht oder um einen metallischen Film. Grundsätzlich können dabei alle auftragbaren Metalle zum Einsatz kommen. Bevorzugt ist allerdings die Auftragung einer dünnen Silberschicht, die Spiegeleffekte hervorrufen kann. Die Auftragung der Metall-, beispielsweise der Silberschicht, erfolgt vorteilhafterweise durch chemische Spritzmetallisierung, wobei Spezialspritzpistolen an Spritzlösungsbehälter angeschlossen werden. Metallisiert wird dabei typischerweise mit besonderen Zweikomponentenpistolen. Aus der einen Pistolendüse wird Silbersalz und aus der anderen Düse Reduktionslösung gespritzt. Die Dauer des Spritzvorgangs beträgt zwischen 15 und 90 Sekunden, danach wird ggf. ein Spülschritt und schließlich ggf. ein Trocknungsschritt vorgenommen. Im anschließenden Erwärmungsschritt werden bevorzugt 120°C, bevorzugter 100°C und insbesondere 80°C nicht überschritten.

Um besondere farbliche Effekte zu erzeugen, kann (können) der (die) Schutzlack(e), die typischerweise transparent sind, eingefärbt werden. Je nach gewünschtem Farbton des beschichteten Substrats wird mindestens eine Farbkomponente gewählt, so daß etwa Messing-, Gold- oder auch Kupfertöne des beschichteten Substrats angestrebt werden können. Insbesondere bevorzugt ist die Zugabe solcher Farbkomponenten, die den optisch beeinträchtigenden Gelbstich einer glänzenden Silberschicht aufheben und einen Chromglanz erzeugen können. Als Farbkomponenten kommen hierbei insbesondere Zaponfarbstoffe und/oder auch optische Aufheller in Betracht. Sofern als Schichtbildner gemäß Verfahrensschritt (d1) mindestens ein Schutzlack eingesetzt wird, wird (werden) bevorzugt die Farbkomponente(n) und/oder der (die) optische(n) Aufheller in den Schutzlack für die Schutzschicht eingearbeitet.

In einer anderen bevorzugten Ausführungsform wird bspw. ein zweikomponentiger Schutzlack mit Farbstoffbeimischungen zur Einfärbung gemäß Verfahrensschritt (d) aufgetragen und nachfolgend wiederum ein Schutzlack, bspw. zweikomponentig, als weitere Klarlackschicht hinzugefügt.

Gegenstand der vorliegenden Erfindung ist demnach auch ein solches Substrat mit metallischem Oberflächeneindruck, das nach dem Verfahren nach einem der Ansprüche 1 bis 13 beschichtet worden ist. Verwendung finden die beschichteten Substrate nach Anspruch 14 insbesondere in allen Anwendungsbereichen, in denen der Eindruck eines massivmetallischen Gesamtcharakters erwünscht ist. Beispielhaft seien an dieser Stelle die Verwendung im Bereich der Souvenir-, Christbaum-, Sanitär-, Dekorations-, Kosmetik-, Haushalts-, Elektronik- und/oder Spielwarenartikel genannt. Auch im gesamten Bereich der im Autobau eingesetzten Bestandteile werden derartig beschichtete Substrate verwendet. Aluprofile stellen einen weiteren Anwendungsbereich dar. Bei den erfindungsgemäß beschichteten Substraten ist der Einsatz sowohl im Innen- als auch im Außenbereich möglich. Ganz besonders bevorzugt ist die Verwendung dieser beschichteten Substrate dann, wenn Spiegeleffekte erwünscht sind.

Die gegenüber dem Stand der Technik überlegenen Resultate bei erfindungsgemäß behandelten Substraten mit metallischem Oberflächeneindruck werden auch dann erreicht, wenn zwar keine Schutzschicht(en), also jene Schicht(en), die entweder Härter und in diesem Fall keinen Schutzlack oder aber Schutzlack und in diesem Fall keinen Härter enthält (enthalten), aufgebracht wird (werden), dafür aber direkt auf die korrodierbare metallische Schicht eine oder mehr Schutzlackschicht/en, jeweils enthaltend - neben ggf. weiteren Substanzen - mindestens einen Schutzlack, mindestens eine Härterkomponente und außerdem mindestens eine weitere funktionelle Substanz, die auf den Aushärtungsprozeß eine verzögernde Wirkung hat, aufgetragen wird (werden).

Hierbei kann es sich um mindestens einen Verzögerer, mindestens einen Weichmacher und/oder um eine Ölkomponente handeln. Auch der Einsatz eines sogenannten elastischen Schutzlacks ist diesbezüglich denkbar. Z.B. die Verzögerer bewirken, daß die Polymerisation des Schutzlacks mit Härterkomponente(n) verzögert erfolgt. Auch in diesem Fall ist eine Durchdringung des Schutzlacks in die unter diesem befindlichen Schichten möglich, so daß Haftfestigkeit und Korrosionsschutz gleichfalls sichergestellt sind. Vorteilhaft ist darüber hinaus auch, zunächst auf die korrodierbare metallische Schicht mindestens eine Schutzschicht, sei es daß sie Härter ohne Schutzlack oder sei es daß sie umgekehrt Schutzlack ohne Härter aufweist, und danach mindestens eine Schutzlackschicht, enthaltend Härter und Schutzlack, mit mindestens einer weiteren die Aushärtung verzögernden Komponente und schließlich mindestens eine weitere Schutzlackschicht mit mindestens einer Härterkomponente und mindestens einem Schutzlack aufzubringen, wobei die letztgenannte Schutzlackschicht schnell aushärtet.

Damit gehören zur vorliegenden Erfindung auch all jene beschichteten Gegenstände, die mindestens eine korrodierbare metallische Schicht aufweisen, die mit mindestens einer weiteren verzögernd aushärtenden Schicht überzogen wird, wobei die verzögernd aushärtende Schicht die mindestens eine darunter befindliche korrodierbare metallische Schicht zu durchdringen in der Lage ist, bspw. ein sogenannter Nanolack. Daher gehören zur vorliegenden Erfindung auch all jene Verfahren, die zur Konservierung solcher beschichteter Substrate dienen, die eine korrodierbare metallische Schicht aufweisen, indem zunächst mindestens eine korrodierbare metallische Schicht aufgetragen wird und darauf ein Schichtbildner aufgetragen wird, der mindestens in korrodierbare metallische Schicht eindringen kann, bevor er aushärtet.

Die vorliegende Erfindung wird durch das nachfolgende Ausführungsbeispiel näher erläutert:

### Ausführungsbeispiel:

### (a)

Das vorliegende Ausführungsbeispiel beschreibt ein Verfahren zur Verspiegelung von Kunststoffoberflächen mit einer eine korrodierbare metallische Schicht enthaltenden Beschichtung, die haftfest ist und konservierende Eigenschaften aufweist.

Es wurde zunächst eine Platte der Dimension 1m x 1m aus ABS-Kunststoff in einen Reaktor mit wasserempfindlichem Grundierlack eingetaucht (zweikomponentiger Lack, Firma Morton, USA (bzw. Rohm & Haas) Durodur 3051D-003® mit Härter 5409; Verfahrensschritt (a)). Durch entsprechende, dem Fachmann geläufige mechanische Präparationen wurde auf diesem Weg eine glatte, glänzende Lackoberfläche der ABS-Kunststoffplatte geschaffen. Bei einer Ofentemperatur von 80°C wurde die Grundierlackschicht für die Dauer von 1,5 h durchgetrocknet (Verfahrensschritt (b)).

Nach dem Auftragen der Grundierlackschicht wurde der Grundierlack durch die Bearbeitung mit einem Zinn im ppm-Bereich enthaltenden Sensibilisierer sensibilisiert, und daraufhin ein Zwischenspülungsschritt vorgenommen.

In einem nächsten Schritt (Verfahrensschritt (c)) wurde im Wege eines Naßverfahrens ein Gemisch von Silbersalzlösung und Reduktionsmitteln auf die grundlackierte Kunststoffplatte aufgesprüht, so daß sich deren Oberfläche mit einem glänzenden Silberspiegel überzog. Nach dem Aufbringen der metallischen Schicht erfolgte ein Abspülschritt und schließlich eine Trocknung der aufgetragenen Schicht aus metallischer Silber-Lösung durch warme Gebläseluft.

Anschließend erfolgte ein 10 minütiger Nachwärmschritt bei einer Temperatur von 70°C.

Um die korrosionsanfällige metallische Schicht, im vorliegenden Fall also die metallische Silberschicht, vor etwaigen äußeren Beeinträchtigungen zu schützen, wurde ein Klarlack (Helacryl®, Spiess & Hecker) mit einer Härterkomponente (Permacron) in einer Schichtdicke von 10 µm auf die metallische Schicht durch Bespritzen der Kunststoffplatte aufgebracht (Verfahrensschritt (d)). Die derart beschichtete Kunststoffplatte wurde nunmehr einer 60-minütigen Ofentrocknung bei Temperaturen zwischen 40 und 60°C unterzogen.

Die gemäß (a) erhaltene beschichtete Kunststoffplatte in einer Dimension von 1m x 1m mit Spiegeleigenschaft wurde schließlich Haft- und Korrosionstests unterzogen.

### (b)

Hierzu wurde zunächst ein dem Fachmann geläufiger Gitterschnitt-Test vorgenommen. In die spiegelnde und schutzlackierte Beschichtung wurde mit einem scharfen Werkzeug ein engmaschiges Gitter geritzt. Anschließend wurde durch einen Klebestreifen die Haftung der einzelnen Schichten aufeinander bzw. auf dem Kunststoffsubstrat überprüft. Hierbei wurde das eingeritzte Gitternetz mit dem Klebestreifen überzogen. Nach Einwirkung äußeren Drucks auf den Klebestreifen und einer Anhaftzeit von ca. 1 Minute wurde der Klebestreifen ruckartig von der Anhaftstelle abgenommen. Auf dem Klebestreifen konnten weder Spuren von Schutzlack noch Spuren der metallischen Silberschicht festgestellt werden.

Dagegen waren in einem Vergleichsversuch mit einem beschichteten Substrat, das gleichfalls eine durchgetrocknete Grundierlackschicht und darüber eine Silberschicht, die aber nicht - wie erfindungsgemäß vorgesehen - nach ihrer Auftragung in den Verfahrensschritten (a) - (c) erwärmt wurden (Substrate, erhältlich aus einem Verfahren ohne Erwärmen nach Verfahrensschritt (c) sind, wie einleitend beschrieben, aus dem Stand der Technik bekannt), auf dem Klebestreifen zahlreiche Anhaftungen von der Beschichtung zu beobachten. Es fanden sich unter anderem Ablösungen der Schutzlackschicht und insbesondere Ablösungen der Silberschicht vom grundlackierten Substrat.

Im Ergebnis bedeutet dies, daß die erfindungsgemäß erhältliche, beschichtete Kunststoffplatte bzw. ein nach dem erfindungsgemäßen Verfahren behandeltes Kunststoffsubstrat (hier eine Platte) keine Anzeichen von Anhaftungsschwierigkeiten erkennen ließen. Sowohl die einzelnen Schichten untereinander als auch die Anhaftung der Beschichtung insgesamt am Substrat erwiesen sich im vorliegenden Test als äußerst stabil, während der Vergleichsversuch die mangelnde Haftfestigkeit der Schutzlackschicht bzw. der Beschichtung insgesamt am Substrat offenbarte.

### (c)

Weiterhin wurde die gemäß (b) behandelte Kunststoffplatte mit den durch das Einritzen des Gitters beigebrachten Oberflächenverletzungen in einem feuchten Raum, demnach also unter stark korrosiven Bedingungen, für einen Zeitraum von 15 Tagen aufbewahrt. Dabei wies die erfindungsgemäß beschichtete Kunststoffplatte keinerlei farbliche Beeinträchtigungen oder Aufwölbungen an den dem Gitternetz benachbarten Bereichen auf.

## Patentansprüche

1. Verfahren zur haftfesten Beschichtung von Substraten mit Schichten, die eine metallische Schicht umfassen, bei dem
(a) auf das Substrat mindestens eine Grundierlackschicht aufgebracht wird,
(b) die mindestens eine Grundierlackschicht nach ihrer Auftragung durchgetrocknet wird,
(c) darauf mittels eines Spritz- und/oder Galvanisierungsverfahren eine korrodierbare metallische Schicht aufgetragen wird und
(d) darauf mindestens eine Schutzlackschicht, aufweisend einen einkomponentigen Schutzlack und/oder einen zweikomponentigen Schutzlack, aufgebracht wird,
**dadurch gekennzeichnet,**
**daß** das gemäß den Schritten (a), (b) und (c) beschichtete Substrat vor dem Schritt (d) einer Erwärmung unterzogen wird.

2. Verfahren nach Anspruch 1, **dadurch gekennzeichnet, daß** nach dem Erwärmungsschritt und vor dem Schritt (d) in einem Verfahrensschritt (d1) entweder ein Schichtbildner ohne Härterkomponente in Form eines Schutzlackes oder eine Schichtbildner ohne Schutzlack in Form einer Härterkomponente aufgetragen wird.

3. Verfahren nach Anspruch 1 oder 2, **dadurch gekennzeichnet, daß** die metallische Schicht eine Silberschicht ist.

4. Verfahren nach einem der Ansprüche 1 bis 3, **dadurch gekennzeichnet, daß** die Durchtrocknung der Grundierlackschicht gemäß Verfahrensschritt (b) eine Luft-, Ofentrocknung und/oder UV-Härtung von mindestens 5 Minuten ist.

5. Verfahren nach einem der Ansprüche 1 bis 4, **dadurch gekennzeichnet, daß** nach Auftragen der Schutzlackschicht oder Auftragen der Schicht gemäß Verfahrensschritt d1) in Anspruch 2 eine Luft- und/oder Ofentrocknung von mindestens 1 Minute oder eine UV-Härtung der Schutzlackschicht erfolgt.

6. Verfahren nach einem der Ansprüche 1 bis 5, **dadurch gekennzeichnet, daß** das Substrat Holz, Spanholz, Metall oder Kunststoff ist.

7. Verfahren nach einem der Ansprüche 1 bis 6, **dadurch gekennzeichnet, daß** das Substrat ein Kunststoff, ausgewählt aus der Klasse Acrylnitril-Butadien-Styrol (ABS), Polystyrol (PS), Polypropylen (PP), Polycarbonat (PC), Polymethylmethacrylat (PMMA), Polyamid (PA), Polyvinylchlorid (PVC), Polybutylenterephthalat (PBTB), Polyphenylenoxid (PPO), Polyurethan-Rim (PUR-Rim), PP-EPDM oder GF-UP, ist.

8. Verfahren nach einem der Ansprüche 1 bis 7, **dadurch gekennzeichnet, daß** die metallische Schicht durch ein Metallspritzreduktionsverfahren aufgebracht wird.

9. Verfahren nach einem der Ansprüche 1 bis 8, **dadurch gekennzeichnet, daß** die Erwärmung nach dem Verfahrensschritt (c) bei einer Temperatur zwischen 50 und 80°C vorzugsweise über mindestens 10 min durchgeführt wird.

10. Verfahren nach einem der Ansprüche 1 bis 9, **dadurch gekennzeichnet, daß** als Schutzlack eine Mischung aufgetragen wird, die außer Schutzlack und Härter mindestens eine Farbstoffkomponente enthält.

11. Verfahren nach einem der Ansprüche 1 bis 10, **dadurch gekennzeichnet, daß** die metallische Schicht in einer Schichtdicke von 0,01 bis 1 µm und die Schutzlackschicht(en) zusammen in einer Schichtdicke von 5 bis 50 µm aufgetragen werden.

12. Verfahren nach einem der Ansprüche 1 bis 11, **dadurch gekennzeichnet, daß** die Grundierlackschicht in einer Schichtdicke von 5 bis 30 µm aufgetragen wird.

13. Verfahren nach einem der Ansprüche 1 bis 12, **dadurch gekennzeichnet, daß** in keinem Verfahrensschritt eine Temperatur von 120°C überschritten wird.

14. Verfahren nach einem der Ansprüche 1 bis 13 zur Herstellung eines Spiegels, verspiegelten Materials, Spielzeug-, Sanitär-, Souvenir-, Haushalts-, Elektronik-, Dekorations- und/oder Chsistbaumschmuckartikels, Aluprofils oder Zubehörteils für den Autobau.

## Claims

1. A method for adhesively coating substrates with layers that comprise a metallic layer, in which
(a) at least one base varnish layer is applied to the substrate,
(b) the at least one base varnish layer is dried thoroughly following its application,
(c) thereafter a corrodible metallic layer is applied by means of a spray and/or galvanization process, and
(d) thereafter at least one protective varnish layer containing a single-component protective varnish and/or a two-component protective varnish is applied,
**characterized in that**
the substrate coated according to the steps (a), (b) and (c) is subject to heating before step (d).

2. A method according to Claim 1, **characterized in that** after the heating step and before step d) in a process step dl) either a layer-forming agent without hardener components in the form of a protective varnish or a layer-forming agent without varnish in the form of a hardener component is applied.

3. A method according to Claim 1 or 2, **characterized in that** the metal layer is a silver layer.

4. A method according to one of Claims 1 to 3, **characterized in that** the drying of the base varnish layer according to process step (b) is air or kiln drying and/or UV hardening of at least 5 minutes.

5. A method according to one of Claims 1 to 4, **characterized in that** after applying the protective varnish layer or applying the layer in accordance with process step (dl) in Claim 2 an air and/or kiln drying of at least 1 minute in duration or a UV hardening of the protective varnish layer takes place.

6. A method according to one of Claims 1 to 5, **characterized in that** the substrate is wood, plywood, metal, or plastic.

7. A method according to one of Claims 1 to 6, **characterized in that** the substrate is a plastic, selected from the class of acrylonitrile-butadiene-styrene (ABS), polystyrene (PS), polypropylene (PP), polycarbonate (PC), polymethylmethacrylate (PMMA), polyamide (PA), polyvinylchloride (PVC), polybutyleneterephthalate (PBTB), polyphenylene oxide(PPO), polyurethane Rim (PUR-Rim), PP-EPDM, and GF-UP.

8. A method according to one of Claims 1 to 7, **characterized in that** the metallic layer is applied by means of a metal spray reduction process.

9. A method according to one of Claims 1 to 8, **characterized in that** the heating after process step (c), is performed at a temperature of between 50 and 80°C, preferably for at least 10 minutes.

10. A method according to one of Claims 1 to 9, **characterized in that** a mixture is applied as a protective varnish that contains, in addition to protective varnish and hardener, at least one coloring component.

11. A method according to one of Claims 1 to 10, **characterized in that** the metallic layer is applied in a layer thickness of 0.01 to 1 µm and the protective varnish layer(s) together are applied in a layer thickness of 5 to 50 µm.

12. A method according to one of Claims 1 to 11, **characterized in that** the base varnish layer is applied in a layer thickness of 5 to 30 µm.

13. A method according to one of Claims 1 to 12, **characterized in that** a temperature of 120°C is not exceeded in any process step.

14. A method according to one of claims 1 to 13 for the production of a mirror, mirror-coated material, toy, sanitary, souvenir, household, electronic, decorative and Christmas tree decoration article, aluminum profile or accessory part for the automobile manufacture.

## Revendications

1. Procédé de revêtement adhérant de substrats avec des couches qui comprennent une couche métallique, dans lequel :
a) au moins une couche de vernis primaire est déposée sur le substrat,
b) la, au moins une, couche de vernis primaire est asséchée après son application,
c) une couche métallique corrosive est déposée ensuite au moyen d'un procédé par projection et/ou galvanisation et
d) au moins une couche de vernis protecteur, comprenant un vernis protecteur à un composant et/ou un vernis protecteur à deux composants, est ensuite déposée,
**caractérisé en ce que**
le substrat recouvert selon les étapes (a), (b) et (c) est soumis à un chauffage avant l'étape (d).

2. Procédé selon la revendication 1, **caractérisé en ce que**
après l'étape de chauffage et avant l'étape (d), au cours d'une étape de procédé (d1), il est déposé soit un agent de revêtement sans composant durcisseur sous forme de vernis protecteur, soit un agent de revêtement sans vernis protecteur sous forme de composant durcisseur.

3. Procédé selon la revendication 1 ou 2, **caractérisé en ce que**
la couche métallique est une couche en argent.

4. Procédé selon l'une des revendications 1 à 3, **caractérisé en ce que**
l'assèchement de la couche de vernis primaire selon l'étape de procédé (b) est obtenu par un séchage à l'air, au four et/ou un durcissement UV d'au moins 5 minutes.

5. Procédé selon l'une des revendications 1 à 4, **caractérisé en ce que**,
après l'application de la couche de vernis protecteur ou l'application de la couche selon l'étape de procédé (d1) de la revendication 2, il est réalisé un séchage à l'air et/ou au four pendant au moins 1 minute ou un durcissement UV de la couche de vernis protecteur.

6. Procédé selon l'une des revendications 1 à 5, **caractérisé en ce que**
le substrat est du bois, des copeaux de bois, un métal ou une matière plastique.

7. Procédé selon l'une des revendications 1 à 6, **caractérisé en ce que**
le substrat est une matière plastique, choisie parmi la classe des acrylonitrile butadiène styrol (ABS), polystyrol (PS), polypropylène (PP), polycarbonate (PC), polyméthylméthacrylate (PMMA), polyamide (PA), polyvinylchlorure (PVC), polybutylène téréphthalate (PBTB), oxyde de polyphénylène (PPO), polyuréthanne RIM (PUR-RIM), PP-EPDM ou GF-UP.

8. Procédé selon l'une des revendications 1 à 7, **caractérisé en ce que**
la couche métallique est déposée par un procédé de réduction par projection métallique.

9. Procédé selon l'une des revendications 1 à 8, **caractérisé en ce que**
le chauffage est réalisé après l'étape de procédé (c) à une température comprise entre 50 et 80°C, de préférence pendant au moins 10 min.

10. Procédé selon l'une des revendications 1 à 9, **caractérisé en ce que**
le vernis protecteur est déposé sous forme de mélange qui contient, en plus du vernis protecteur et du durcisseur, au moins un composant colorant.

11. Procédé selon l'une des revendications 1 à 10, **caractérisé en ce que**
la couche métallique est déposée en une couche d'épaisseur de 0,01 à 1 µm et la (les) couche(s) de vernis protecteur conjointement en une couche d'épaisseur de 5 à 50 µm.

12. Procédé selon l'une des revendications 1 à 11, **caractérisé en ce que**
la couche de vernis primaire est déposée en une couche d'épaisseur de 5 à 30 µm.

13. Procédé selon l'une des revendications 1 à 12, **caractérisé en ce que**,
dans aucune étape de procédé, la température ne dépasse pas 120°C.

14. Procédé selon l'une des revendications 1 à 13 destiné à fabriquer un miroir, un matériau argenté, un jouet, un objet sanitaire, un objet souvenir, un ustensile, un objet électronique, un objet décoratif, et/ou un ornement pour arbre de Noël, un profilé aluminium ou un accessoire pour la construction automobile.
